# EUROPÄISCHE PATENTSCHRIFT

(11) **EP 1 108 502 B1**
(45) Veröffentlichungstag und Bekanntmachung des Hinweises auf die Patenterteilung: **09.03.2005**
(21) Anmeldenummer: 00127439.8
(22) Anmeldetag: 14.12.2000
(51) Int. Cl.: B24C 1/04, B24C 1/06, B44C 1/22

(54) **Vorrichtung zum Bemustern von Glaserzeugnissen**
Apparatus for patterning glass articles
Appareil pour former des motifs sur des articles en verre

(30) Priorität: 16.12.1999 DE 19960829
(43) Veröffentlichungstag der Anmeldung: 20.06.2001
(73) Patentinhaber: Kunstglaserei Johann Winter, 94161 Ruderting (DE)
(72) Erfinder: Winter, Johann, 94161 Ruderting (DE)
(74) Vertreter: Englaender, Klaus, Dipl.-Ing.

(56) Entgegenhaltungen:
- EP-A- 0 940 223
- DE-C- 897 148
- DE-U- 29 821 008
- GB-A- 2 114 923
- PATENT ABSTRACTS OF JAPAN vol. 1996, no. 11, 29. November 1996 (1996-11-29) & JP 08 184920 A (KATSURAGAWA ELECTRIC CO LTD), 16. Juli 1996 (1996-07-16)

## Beschreibung

Die Erfindung betrifft eine Vorrichtung zum Bemustern von Glaserzeugnissen, insbesondere von Glasplatten, Spiegeln, Glaskörpern und dergleichen, vor allem zu Dekorationszwecken, durch Sandstrahlen, mit zumindest einer auf einer zu bemusternden Oberfläche des Glaserzeugnisses anbringbaren Schablone und zumindest einer auf die Schablone ausrichtbaren Sandstrahldüse und mit Mitteln zum Pressen der Schablone an die zu bemusternde Oberfläche des Glaserzeugnisses entlang einer Anpresszone im Bereich eines aus der Sandstrahldüse auf der zu bemusternden Oberfläche auftreffenden Sandstrahls, wobei sich die Anpresszone über die gesamte Höhe der zu bemusternden Oberflache erstreckt. Eine derartige Vorrichtung ist aus der DE 298 21 008 U1 bekannt.

Zum Übertragen von Mustern auf Oberflächen von Glaserzeugnissen werden bislang in erster Linie vorgeschnittene Folien auf die zu bemusternde Glasoberfläche geklebt. Diese Folie bildet eine Einmalschablone und wird nach Nutzung üblicherweise verworfen.

Die Verwendung von Folien hat den Nachteil, daß die Folien nur einmal verwendet werden können, da sie beim Abziehen von Glas unvermeidlich zerstört werden. Außerdem ist der Einsatz von Folien sehr arbeits- und damit kostenintensiv, da diese nur von Hand abgezogen werden können, wobei außerdem die Gefahr besteht, dass das Glas verkratzt wird.

Es ist auch bekannt, die folienartigen Schablonen durch solche aus Blech zu ersetzen. Zu diesem Zweck werden die Blechschablonen auf der zu bemusternden Oberfläche des Glaserzeugnisses angeordnet und gegenüber dieser gehaltert. Ein Nachteil der Bemusterung mittels Blechschablonen besteht jedoch darin, dass diese nicht plan auf der zu bemusternden Oberfläche beim Sandstrahlen anliegen, so dass unscharfe Konturen des Musters erzeugt werden, was zum einen mit einer hohen Ausschussrate und zum anderen mit einem wenig qualitätsvollen Endprodukt verbunden sein kann.

Angesichts dieses Standes der Technik liegt der Erfindung die Aufgabe zugrunde, eine Vorrichtung zum Bemustern von Glaserzeugnissen der eingangs genannten Art zu schaffen, die unter Verwendung von mehr oder weniger starren Schablonen, insbesondere

Blechschablonen, die Erzeugung hochqualitativer bemusterter Glasoberflächen sowie eine kostengünstige Prozessführung gewährleisten.

Gelöst wird diese Aufgabe durch die kennzeichnenden Merkmale des Anspruchs 1. Vorteilhafte Weiterbildungen der Erfindung sind in den Unteransprüchen angegeben.

Demnach sieht die Erfindung mit anderen Worten das Andrücken der Schablone an einen flächenmäßig auf die unmittelbare Umgebung der Sandstrahldüse begrenzten Bereich, wobei der Verbund aus Schablone und zu bemusterndem Glaserzeugnis an der Andrückund Sandstrahlstelle bevorzugt kontinuierlich vorbeibewegt wird, um auf diese Weise die gesamte zu bemusternde Oberfläche des Glaserzeugnisses zu bemustern.

Da erfindungsgemäß mit einer kleinflächigen Anpresszone, vor allem einer Anpresslinie gearbeitet wird, an die sich der Sandstrahlbereich unmittelbar anschließt, ist stets gewährleistet, dass die Schablone im Sandstrahlbereich satt auf der zu bemusternden Oberfläche des Glaserzeugnisses anliegt. Dadurch wird ein sauberes und präzises Bemustern der Oberfläche erreicht, weil unerwünschte Zwischenräume zwischen Glas und Schablone, in welche Sandstrahlgut eintreten könnte, mit Sicherheit vermieden werden. Das starke Pressen der Schablone in einer flächenmäßig stark begrenzten Anpresszone gegen das Glaserzeugnis läßt sich außerdem mit relativ einfachen Mitteln gewährleisten.

Gemäß einer einfachen bevorzugten Ausführungsform umfasst das Anpressmittel eine Anpressplatte, die mit einer Anpresskante versehen ist, die an die Kontur der zu bemusternden Oberfläche angepasst ist, die senkrecht zur Förderrichtung des Verbunds aus Anpressplatte und Schablone verläuft. Im Falle eines zylindrischen Glaserzeugnisses verläuft diese Anpresskante parallel zu einer erzeugenden Mantellinie des Zylinders; d.h., in diesem Fall verläuft die Anpresskante ebenso linear wie im Fall einer zu bemusternden ebenen Glasplatte.

Bevorzugt wird die Anpressplatte unter Federvorspannung mit ihrer Anpresskante an die zu bemusternde Oberfläche angelegt.

Das Fördermittel umfasst ein Gegenlager zu den Anpressmitteln, gegen welches das Glaserzeugnis, beispielsweise die Glasplatte anliegt. Ein derartiges Gegenlager kann im Falle einer Glasplatte eine Stützplatte bzw. allgemein ein Stützgestell sein, die bzw. das bevorzugt im mehrfachen Punktkontakt mit der Glasplatte, beispielsweise über Saugnäpfe steht.

Zugunsten einer kostengünstigen Prozessführung und eines optimalen Bemusterungsvorgangs ist die Sandstrahldüse an einem Hubschlitten zur vertikalen Hinund Herbewegung parallel zur Kontaktzone angebracht.

Vorteilhafterweise erfolgt die Anlage der Anpressmittel an der zu bemusternden Oberfläche des Glaserzeugnisses mit geringstmöglicher Reibung. Diese kann beispielsweise dadurch bereitgestellt werden, dass die Anpressmittel im Bereich der Anpresszone eine möglichst geringe Flache aufweisen und/oder eine reibungsmindernde Einrichtung tragen, beispielsweise eine Beschichtung, etwa aus Teflon. Alternativ hierzu kann eine verringerte Reibung in der betreffenden Zone dadurch erreicht werden, dass die Anlage der Anpressmittel an der Oberfläche mittels Rollen erfolgt, die so relativ zueinander ausgerichtet sind, dass sie mit ihrem jeweiligen Außenumfang insgesamt die Anpresszone festlegen.

Das Anstellen der Anpressmittel an der zu bemusternden Oberfläche des Glaserzeugnisses kann beispielsweise mit Hilfe von Druckzylindermitteln erfolgen, was den Vorteil hat, dass beispielsweise unterschiedliche Stärken einer Glasplatte ohne spezielle Einstellung durch die Druckzylindermittel aufgenommen werden können.

Weitere bevorzugte Ausführungsformen sind den Unteransprüchen zu entnehmen.

Nachfolgend wird die Erfindung anhand der Zeichnungen beispielhaft näher erläutert; es zeigen:
- Fig. 1: jeweils in Draufsicht und Ansicht entlang einer seitlichen Kante eine Glasplatte und eine Schablone zur Bemusterung derselben mit quadratischen Mustern,
- Fig. 2: eine ähnliche Anordnung aus Glaserzeugnis und Schablone für einen zylindrischen Glaskörper in Aufrissansicht und Draufsicht bei über den zylindrischen Glaskörper gestülpter Schablone,
- Fig. 3: schematisch eine Ausführungsform der Vorrichtung zur Bemusterung der in Fig. 1 gezeigten Glasplatte mit Hilfe einer Kreisöffnungen aufweisenden Schablone, und
- Fig. 4: eine Ansicht der Vorrichtung von Fig. 3 in Fig. 3 von rechts ausgesehen.

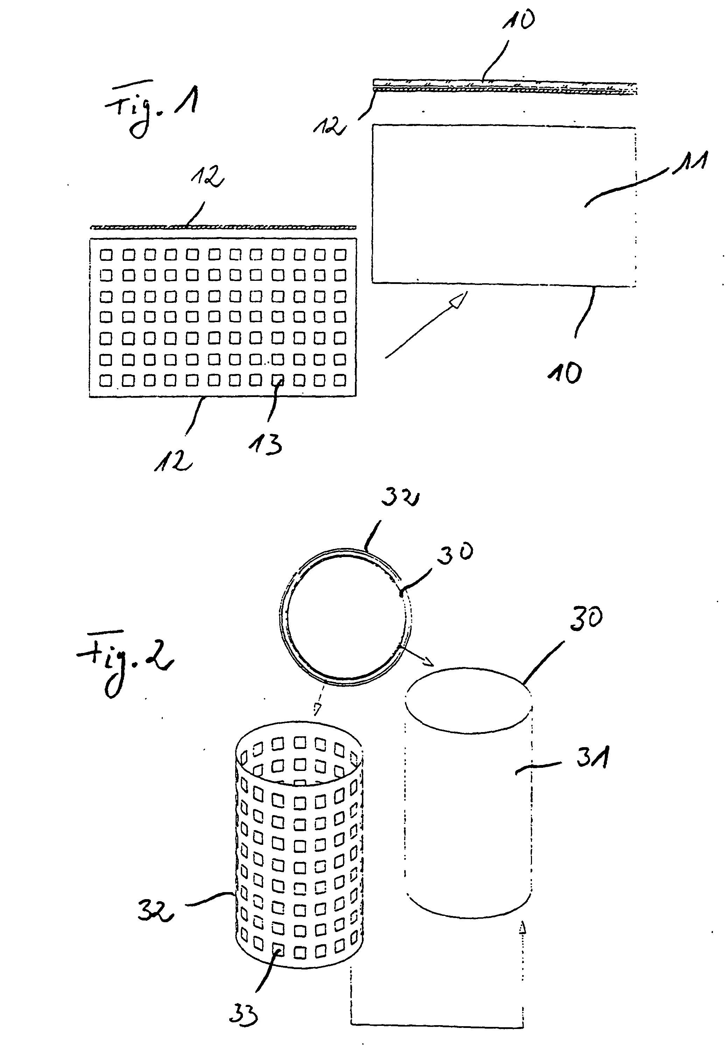

In Fig. 1 ist eine Glasplatte 10 in Draufsicht gezeigt, die auf einer Oberfläche 11, in der Zeichnung der Oberseite bemustert werden soll. Die Bemusterung soll aus gleichmäßig beabstandeten gleich großen quadratischen Mattierungsstellen bestehen, die mit Hilfe einer Schablone 12 erzeugt werden, die zur Erzeugung der quadratischen Mattierungsstellen quadratische Durchbrüche 13 aufweist. Die Größe der plattenförmigen Schablone 12, die beispielsweise aus Aluminium oder einem sonstigen Metallblech, jedoch auch aus Kunststoff bestehen kann, entspricht im wesentlichen der Fläche der Glasplatte 10.

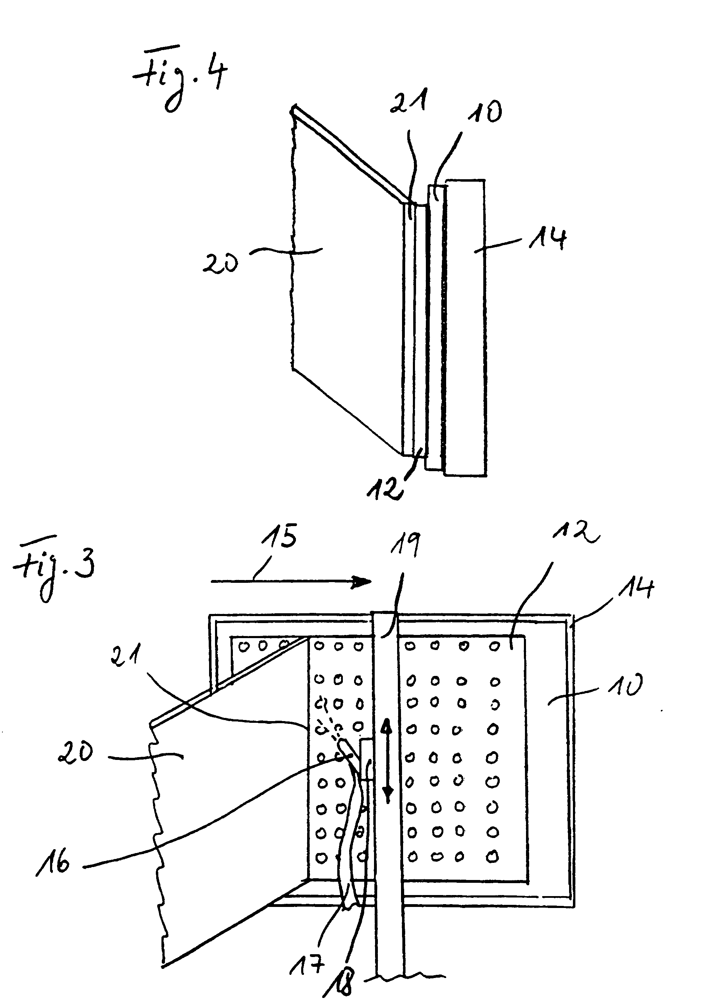

Über dem oberen Rand ist die Glasplatte 12 in Kantenansicht gezeigt und über dem oberen Rand der Glasplatte 10 ist der Verbund aus Glasplatte 10 und auf ihrer zu bemusternden Oberfläche 11 angeordneter Schablone 12 in Kantenansicht gezeigt. Die quadratischen Mattierungsstellen werden mit Hilfe der Schablone 12 durch Sandstrahlen erzeugt. Hierzu kommt eine Bemusterungsvorrichtung zum Einsatz, die in Fig. 3 und 4 hinsichtlich der wesentlichen Teile schematisch gezeigt ist.

Wie aus Fig. 3 hervorgeht, ist der in Fig. 1 im oberen rechten Teil gezeigte Verbund aus Glasplatte 10 und Schablone 12 mit der freien Oberfläche der Glasplatte 10 an einem Gerüst bzw. einer Platte 14 abgestützt, das bzw. die flächenmäßig etwas größer ist als die abgestützte Glasplatte 10, die im Gegensatz zu unserer Darstellung von Fig. 1 ihrerseits größer ist als die Schablone 12. Diese Anordnung aus Schablone 12, Glasplatte 10 und Stützplatte 14 ist auf einem nicht dargestellten Bandförderer angebracht, der an der Unterseite dieses Verbunds angeordnet ist und diesen in Richtung des Pfeils 15 in Fig. 3 von links nach rechts transportiert.

Zur Bemusterung der Glasplatte 10 mittels der Schablone 12 kommt eine Sandstrahleinrichtung zum Einsatz, die eine Sandstrahldüse 16 umfasst, welcher über einen Schlauch 17 Strahlsand vorgegebener Körnigkeit unter Druck zugeführt wird. Die Sandstrahldüse 16 ist an einen Schlitten 18 angebracht, der entlang einer vertikalen Schlittenführung 19 auf und abfahrbar ist, um die gesamte Höhe der Schablone 12 beim Sandstrahlen abzudecken. Antrieb des Schlittens sowie Versorgung der Sandstrahldüse 16 gehören zum Stand der Technik und werden deshalb vorliegend nicht näher erläutert.

Um zu gewährleisten, dass die Schablone 12 zumindest im Sandstrahlbereich satt auf der zu bemusternden Oberfläche der Glasplatte 10 anliegt, ist erfindungsgemäß ein Andrückmittel vorgesehen, das bei der in Fig. 3 gezeigten Ausführungsform aus einer Andrückplatte 20 aus Blech oder Kunststoff besteht, die mit ihrer Andrückkante 21 unter vorgegebenen Druck gegen die Schablone 12 presst. Die Platte 20 ist in nicht gezeigter Weise an einer stationären Stütze angebracht und kann in bezug auf die Schablone 12 vor und rückgefahren werden, um die Stärke der Schablone 12 hinsichtlich des erforderlichen Anpressdrucks zu berücksichtigen, der zu einer satten Anlage der Schablone 12 an der Glasplatte 10 entlang der Andrückkante 21 führt.

Wie aus Fig. 3 und 4 hervorgeht, ist die Andrückplatte 20 mit ihrer Andrückkante 21 schräg an die Schablone 12 unter einem spitzen Winkel so angestellt, dass der Verbund aus Schablone 12, Glasplatte 10 und Stütze 14 ungeachtet der durch die Platte 20 einwirkenden Andrückkraft problemlos mittels des Förderers vorbei transportiert werden kann.

Fig. 2 zeigt eine andere Ausführungsform eines zu bemusternden Glaskörpers, nämlich einen Glaszylinder 30, dessen außen liegende Mantelfläche 31 mit einer Schablone 32 bemustert werden soll und zwar mit denselben quadratischen Mattierungsstellen wie bei der Anordnung von Fig. 1. Zu diesem Zweck wird die zylindrische Schablone 32 über den zylindrischen Glaskörper 30 gestülpt. Dieser Verbund aus Schablone 32 und Glaskörper 30 wird drehfest auf einem nicht gezeigten Drehtisch angeordnet, der in der Anordnung von Fig. 3 den nicht gezeigten Bandförderer ersetzt. Gemäß Fig. 3 wird die Andrückplatte 20 mit ihrer Andrückkante 21 an eine Mantellinie der Schablone 32 angestellt und drückt diese im Linienkontakt an eine Mantellinie des zylindrischen Glaskörpers 30, und zwar in dem Bereich, in welchem die Strahldüse 16 Sandstrahlgut austrägt, so dass auch für diesen zylindrischen Körper dieselbe Wirkung erzielt wird, wie bei der Bemusterung der ebenen Glasplatte gemäß Fig. 1.

## Patentansprüche

1. Vorrichtung zum Bemustern von Glaserzeugnissen (10, 30), insbesondere Glasplatten, Spiegeln, Glaskörpern und dgl., vor allem zu Dekorationszwecken, durch Sandstrahlen, mit zumindest einer auf einer zu bemusternden Oberflache (11, 31) des Glaserzeugnisses (10, 30) anbringbaren Schablone (12, 32) und zumindest einer auf die Schablone (12, 32) ausrichtbaren Sandstrahldüse (16) und mit Mitteln (20, 21) zum Pressen der Schablone (12, 32) an die zu bemusternde Oberfläche (11, 31) des Glaserzeugnisses (10, 30) entlang einer Anpresszone im Bereich eines aus der Sandstrahldüse (16) auf der zu bemusternden Oberfläche (11, 31) auftreffenden Sandstrahls, wobei sich die Anpresszone über die gesamte Höhe der zu bemusternden Oberflache (11, 31) erstreckt,
**gekennzeichne**t durch Mittel zum Fördern des Glaserzeugnisses (10, 30) gemeinsam mit der gegen sie gepressten Schablone (12, 32) quer zur Anpresszone.

2. Vorrichtung nach Anspruch 1, **dadurch gekennzeichnet, dass** die Anpreßmittel (20, 21) derart ausgelegt sind, dass die Anpreßzone im wesentlichen Linienform hat.

3. Vorrichtung nach Anspruch 1 oder 2, **dadurch gekennzeichnet, dass** die Anpreßmittel (20, 21) in bezug auf die Förderrichtung der Fördermittel stromab von der Kontaktzone angeordnet sind.

4. Vorrichtung nach Anspruch 1, 2 oder 3, **dadurch gekennzeichnet, dass** die Anpreßmittel (20, 21) zumindest eine Anpreßplatte (20) mit einer Anpreßkante (21) umfassen, die an die Kontur der zu bemusternden Oberfläche (11, 31) senkrecht zur Förderrichtung der Fördermittel angepaßt ist.

5. Vorrichtung nach Anspruch 4, **dadurch gekennzeichnet, dass** die Anpreßplatte (20) schräg an die zu bemusternde Oberfläche (11, 30) angestellt ist.

6. Vorrichtung nach Anspruch 4 oder 5, **dadurch gekennzeichnet, dass** die Anpreßplatte (20) eine starre Platte ist.

7. Vorrichtung nach Anspruch 4, 5 oder 6, **dadurch gekennzeichnet, dass** die Anpreßplatte (20) unter Federvorspannung mit ihrer Anpreßkante (21) an der zu bemusternden Oberfläche (11, 31) anliegt.

8. Vorrichtung nach einem der Ansprüche 4 bis 7, **dadurch gekennzeichnet, dass** die Anpreßmittel (20, 21) eine Abstandeinstelleinrichtung zum Einstellen der Lage der Anpreßplatte (20) in bezug auf die zu bemusternde Oberfläche (11, 31) aufweisen.

9. Vorrichtung nach einem der Ansprüche 1 bis 8, **dadurch gekennzeichnet, dass** die Sandstrahldüse (16) an einem Hubschlitten (18) zur vertikalen Hin- und Herbewegung parallel zur Kontaktzone angebracht ist.

10. Vorrichtung nach einem der Ansprüche 1 bis 9 zum Bemustern eines Glaserzeugnisses (10) mit ebener zu bemusternder Oberfläche (11), insbesondere einer Glasplatte, **dadurch gekennzeichnet, dass** die Fördermittel einen Linearförderer, bevorzugt einen Bandförderer umfassen, der eine Abstützung (14) für das Glaserzeugnisses (10) im Bereich der zu bemusternden Oberfläche (11) als Gegenlager für die von den Anpreßmitteln (20, 21) auf diese ausgeübte Anpreßkraft aufweist.

11. Vorrichtung nach einem der Ansprüche 1 bis 9 zum Bemustern der Mantelaußenfläche (31) eines zylindrischen Glaserzeugnisses (30) **dadurch gekennzeichnet, dass** die Fördermittel einen Drehtisch umfassen, auf welchem das Glaserzeugnis (30) zur Drehung mit diesem festgesetzt ist.

12. Vorrichtung nach Anspruch 10 oder 11, **dadurch gekennzeichnet, dass** die Fördermittel eine Einrichtung zur Halterung der Schablone (12, 32) am Glaserzeugnis (10, 30) umfassen.

13. Vorrichtung nach einem der Ansprüche 1 bis 12, **dadurch gekennzeichnet, dass** die Anpressmittel Mittel zur Verringerung der Reibung in bezug auf die zu bemusternde Oberfläche des Glaserzeugnisses umfassen.

14. Vorrichtung nach Anspruch 13, **dadurch gekennzeichnet, dass** die Reibungsverringerungsmittel auf der Oberfläche anliegende Rollen umfassen.

15. Vorrichtung nach einem der Ansprüche 1 bis 14, **dadurch gekennzeichnet, dass** die Anpressmittel Druckzylindermittel zum Aufbringen von Anpresskraft umfassen.

## Claims

1. Device for patterning glass products (10, 30), in particular glass plates, mirrors, vitreous bodies and the like, above all for decoration purposes, by sandblasting, said device having at least one template (12, 32) which can be applied to a surface (11, 31), which is to be patterned, of the glass product (10, 30), and at least one sandblasting nozzle (16) which can be directed at the template (12, 32), and having means (20, 21) for pressing said template (12, 32) against that surface (11, 31) of the glass product (10, 30) which is to be patterned, along a pressing-on zone in the region of a sandblast impinging, from the sandblasting nozzle (16), on the surface (11, 31) to be patterned, wherein said pressing-on zone extends over the entire height of the surface (11, 31) to be patterned,
**characterised by**
means for conveying the glass product (10, 30), together with the template (12, 32) which is pressed against them, transversely to the pressing-on zone.

2. Device according to claim 1, **characterised in that** the pressing-on means (20, 21) are designed in such a way that the pressing-on zone is substantially linear.

3. Device according to claim 1 or 2, **characterised in that** the pressing-on means (20, 21) are disposed downstream of the contact zone with respect to the direction of conveyance of the conveying means.

4. Device according to claim 1, 2 or 3, **characterised in that** the pressing-on means (20, 21) comprise at least one pressing-on plate (20) with a pressing-on edge (21) which is adapted, perpendicularly to the direction of conveyance of the conveying means, to the contour of the surface (11, 31) to be patterned.

5. Device according to claim 4, **characterised in that** the pressing-on plate (20) is set obliquely to the surface (11, 31) to be patterned.

6. Device according to claim 4 or 5, **characterised in that** the pressing-on plate (20) is a rigid plate.

7. Device according to claim 4, 5 or 6, **characterised in that** the pressing-on plate (20) rests under spring-pretensioning, with its pressing-on edge (21), against the surface (11, 31) to be patterned.

8. Device according to one of claims 4 to 7,
c**haracterised in that** the pressing-on means (20, 21) have a distance-setting apparatus for setting the location of the pressing-on plate (20) with respect to the surface (11, 31) to be patterned.

9. Device according to one of claims 1 to 8,
**characterised in that** the sandblasting nozzle (16) is mounted on a lifting carriage (18) for vertical reciprocating movement parallel to the contact zone.

10. Device according to one of claims 1 to 9 for patterning a glass product (10) having a flat surface (11) which is to be patterned, in particular a glass plate, **characterised in that** the conveying means comprise a linear conveyer, preferably a belt conveyer, which has a support (14) for the glass product (10) in the region of the surface (11) to be patterned, as an abutment for the pressing-on force exerted upon the said surface by the pressing-on means (20, 21).

11. Device according to one of claims 1 to 9 for patterning the outer superficies (31) of a cylindrical glass product (30), **characterised in that** the conveying means comprise a turntable on which the glass product (30) is fixed for rotation with said table.

12. Device according to claim 10 or 11, **characterised in that** the conveying means comprise an apparatus for holding the template (12, 32) on the glass product (10, 30).

13. Device according to one of claims 1 to 12,
**characterised in that** the pressing-on means comprise means for reducing the friction with respect to that surface of the glass product which is to be patterned.

14. Device according to claim 13, **characterised in that** the friction-reducing means comprise rollers which rest on the surface.

15. Device according to one of claims 1 to 14,
**characterised in that** the pressing-on means comprise pressure-cylinder means for applying pressing-on force.

## Revendications

1. Dispositif pour réaliser par sablage des motifs sur des articles en verre (10, 30), en particulier des plaques de verre, des miroirs, des corps de verre et similaire, en particulier dans des buts décoratif, comprenant au moins un patron (12, 32) applicable sur une surface supérieure (11, 31) de l'article en verre (10, 30) sur laquelle un motif est à réaliser, et au moins une buse de sablage (16) dirigeable sur le patron (12, 32) et des moyens pour presser le patron (12, 32) contre la surface supérieure (11, 31) de l'article en verre (10, 30) le long d'une zone de pression au niveau d'un jet de sable issu de la buse de sablage (16) et touchant la surface supérieure (11, 31), la zone de pression s'étendant sur la totalité de la hauteur de la surface supérieure (11, 31), **caractérisé par** des moyens pour acheminer l'article verre (10, 30) ensemble avec le patron (12, 32) pressé contre lui transversalement à la zone de pression.

2. Dispositif selon la revendication 1, **caractérisé en ce que** les moyens de pression (20, 21) sont réalisés de telle sorte que la zone de pression est sensiblement linéaire.

3. Dispositif selon la revendication 1 ou 2, **caractérisé en ce que** les moyens de pression (20, 21) sont disposés en aval de la zone de contact par rapport à la direction d'acheminement des moyens d'acheminement.

4. Dispositif selon la revendication 1, 2 ou 3, **caractérisé en ce que** les moyens de pression (20, 21) comprennent au moins une plaque de pression (20) avec une arête de pression (21), qui est adaptée au contour de la surface supérieure (11, 31) perpendiculairement à la direction d'acheminement des moyens d'acheminement.

5. Dispositif selon la revendication 4, **caractérisé en ce que** la plaque de pression (20) est disposée de manière inclinée contre la surface supérieure (11, 31).

6. Dispositif selon la revendication 4 ou 5, **caractérisé en ce que** la plaque de pression (20) est une plaque rigide.

7. Dispositif selon la revendication 4, 5 ou 6, **caractérisé en ce que** la plaque de pression (20) repose sous contrainte élastique avec son arête de pression (21) contre la surface supérieure (11, 31).

8. Dispositif selon l'une des revendications 4 à 7, **caractérisé en ce que** les moyens de pression (20, 21) comprennent un arrangement de réglage d'écartement pour régler la position de la plaque de pression (20) par rapport à la surface supérieure (11, 31).

9. Dispositif selon l'une des revendications 1 à 8, **caractérisé en ce que** la buse de sablage (16) est déplacée verticalement en va et vient parallèlement à la zone de contact par un coulisseau de levage (18).

10. Dispositif selon l'une des revendications 1 à 9 pour réaliser des motifs sur un article en verre (10) ayant une surface supérieure plane (11) sur laquelle un motif est à réaliser, en particulier une plaque de verre, **caractérisé en ce que** les moyens d'acheminement comprennent un convoyeur linéaire, avantageusement un convoyeur à bande, qui comprend un support (14) pour l'article en verre (10) dans la zone de la surface supérieure (11) en réaction à la force de pression exercée sur cette surface par les moyens de pression (20, 21).

11. Dispositif selon l'une des revendications 1 à 9 pour réaliser des motifs sur la surface d'enveloppe externe (31) d'un article en verre cylindrique (30), **caractérisé en ce que** les moyens d'acheminement comprennent une table rotative, sur laquelle l'article en verre (30) est fixé pour tourner avec la table.

12. Dispositif selon la revendication 10 ou 11, **caractérisé en ce que** les moyens d'acheminement comprennent un arrangement pour maintenir le patron (12, 32) contre l'article en verre (10, 30).

13. Dispositif selon l'une des revendications 1 à 12, **caractérisé en ce que** les moyens de pression comprennent des moyens pour diminuer le frottement au niveau de la surface supérieure de l'article en verre.

14. Dispositif selon la revendication 13, **caractérisé en ce que** les moyens de réduction de frottement comprennent des rouleaux reposant contre la surface supérieure.

15. Dispositif selon l'une des revendications 1 à 14, **caractérisé en ce que** les moyens de pression comprennent des moyens de vérin pour l'application de la force de pression.
